# EUROPÄISCHE PATENTSCHRIFT

(11) **EP 2 559 810 B1**
(45) Veröffentlichungstag und Bekanntmachung des Hinweises auf die Patenterteilung: **12.09.2018**
(21) Anmeldenummer: 12005354.1
(22) Anmeldetag: 23.07.2012
(51) Int. Cl.: E01B 1/00, E04B 1/36, F16F 1/376

(54) **UNTERSCHOTTERMATTE**
UNDER BALLAST MAT
TAPIS SOUS BALLAST

(30) Priorität: 13.08.2011 DE 102011110572
(43) Veröffentlichungstag der Anmeldung: 20.02.2013
(73) Patentinhaber: Calenberg Ingenieure GmbH, 31020 Salzhemmendorf (DE)
(72) Erfinder: Karlsohn, Dieter, 50374 Erftstadt (DE); Karlsohn, Björn, 50374 Erftstadt (DE)
(74) Vertreter: Wagner, Carsten

(56) Entgegenhaltungen:
- EP-A1- 0 388 190
- EP-A1- 1 260 642
- WO-A1-98/13550
- WO-A1-2011/053710
- DE-A1- 3 628 762
- FR-A3- 2 510 633

## Beschreibung

Die Erfindung betrifft eine Unterschottermatte der im Oberbegriff des Anspruchs 1 genannten Art.

Derartige Unterschottermatten sind allgemein bekannt, die auch als Gleisbettmatten bezeichnet und im Gleisoberbau eingesetzt werden.

Durch EP-A-388190 ist ein Elastomerlager für den Eisenbahnbau bekannt, das einen Grundkörper aufweist, an dem Federelemente angeordnet sind. Die Mehrzahl der Federelemente weist einen kreisrunden Querschnitt auf, während einige Federelemente einen längsovalen Querschnitt aufweisen.

Durch WO-A-2011/053710 ist ein im Wesentlichen formsteifes Bodenelement aus Kunststoff bekannt, an dem rasterartig Erhebungen angeordnet sind.

Durch FR-A-2510633 ist Unterbau für einen Kunstrasen bekannt, der ein Drainageelement aus Kunststoff aufweist, an dessen Unterseite zur Bildung von Drainagekanälen Vorsprünge angeordnet sind. Eine Unterschottermatte der betreffenden Art ist bekannt und wird von der Anmelderin unter der Bezeichnung USM 1000 W vertrieben. Die bekannte Unterschottermatte weist einen Grundkörper auf, an dem Federelemente aus elastomerem Material angeordnet sind, deren Querschnitt sich von dem Grundkörper zu ihrem freien Ende hin verjüngt. Bei der bekannten Unterschottermatte sind die Federelemente kegelstumpfförmig ausgebildet. Die bekannte Unterschottermatte weist ausgezeichnete Eigenschaften im Hinblick auf die Reduzierung von Erschütterungen und Körperschall auf.

Der Erfindung liegt die Aufgabe zugrunde, die bekannte Unterschottermatte weiter zu verbessern.

Diese Aufgabe wird durch die im Anspruch 1 angegebene Erfindung gelöst.

Die Erfindung sieht vor, dass wenigstens ein Lagerelement einen ovalen Querschnitt aufweist. Auf diese Weise ist unter Beibehaltung der vorteilhaften Eigenschaften der bekannten Unterschottermatte die horizontale Steifigkeit der Unterschottermatte entlang der längeren Ausdehnung des ovalen Querschnitts verbessert.

Die Erfindung sieht ferner vor, dass eine erste Gruppe von Federelementen, bei der sich die längere Ausdehung des Querschnittes des jeweiligen Federelements entlang einer ersten Achse erstreckt, und wenigstens eine zweite Gruppe von Federelementen vorgesehen ist, bei der sich die längere Ausdehnung des Querschnitts des jeweiligen Federelementes entlang einer zweiten Achse erstreckt, wobei die erste Achse und die zweite Achse zueinander winklig, insbesondere rechtwinklig, angeordnet sind. Dadurch ergibt sich eine verbesserte horizontale Steifigkeit entlang der ersten und der zweiten Achse.

Weiterhin sieht die Erfindung vor, dass entlang beider Achsen abwechselnd Federelemente der ersten Gruppe und Federelemente der zweiten Gruppe angeordnet sind. Auf diese Weise ist die Erhöhung der horizontalen Steifigkeit entlang der Fläche des Grundkörpers auf gleichmäßige Weise erzielt.

Unter einem ovalen Querschnitt im Sinne der Erfindung wird ein Querschnitt verstanden, dessen Ausdehnung entlang zweier zueinander senkrechter Achsen unterschiedlich ist. Hierbei kann der Querschnitt vollständig konvex ausgebildet sein. Erfindungsgemäß kann der Querschnitt jedoch auch konkave Abschnitte aufweisen.

Eine Weiterbildung der Erfindung sieht vor, dass der Querschnitt wenigstens eines Federelementes wenigstens eine Symmetrieachse, insbesondere zwei zueinander senkrechte Symmetrieachsen aufweist. Im letztgenannten Fall ist der Querschnitt ellipsenförmig.

Gemäß einer anderen vorteilhaften Weiterbildung sind die Federelemente rasterartig, insbesondere nach Art von Zeilen und Spalten, an dem Grundkörper angeordnet. Auf diese Weise ergeben sich entlang der Grundfläche des Grundkörpers gleichmäßige Federungseigenschaften.

Eine andere Weiterbildung der Erfindung sieht vor, dass der Grundkörper mattenartig ausgebildet ist. Diese Ausführungsform ist insbesondere dann vorteilhaft, wenn das Elastomerlager eine Unterschottermatte ist.

Um die Herstellung des erfindungsgemäßen Elastomerlagers einfach zu gestalten, sieht eine andere vorteilhafte Weiterbildung der Erfindung vor, dass die Federelemente einstückig mit dem Grundkörper ausgebildet sind.

Die Erfindung wird nachfolgend anhand der beigefügten Zeichnung näher erläutert, in der schematisch ein Ausführungsbeispiel einer erfindungsgemäßen Unterschottermatte dargestellt ist.

Es zeigt:
Figur 1: eine Perspektivansicht eines Ausführungsbeispieles einer erfindungsgemäßen Unterschottermatte,
Figur 2: eine Draufsicht auf die Unterschottermatte gemäß Figur 1.

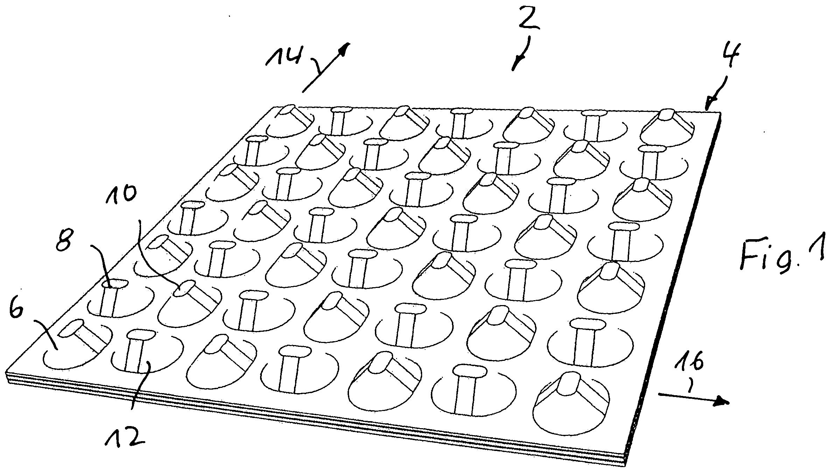

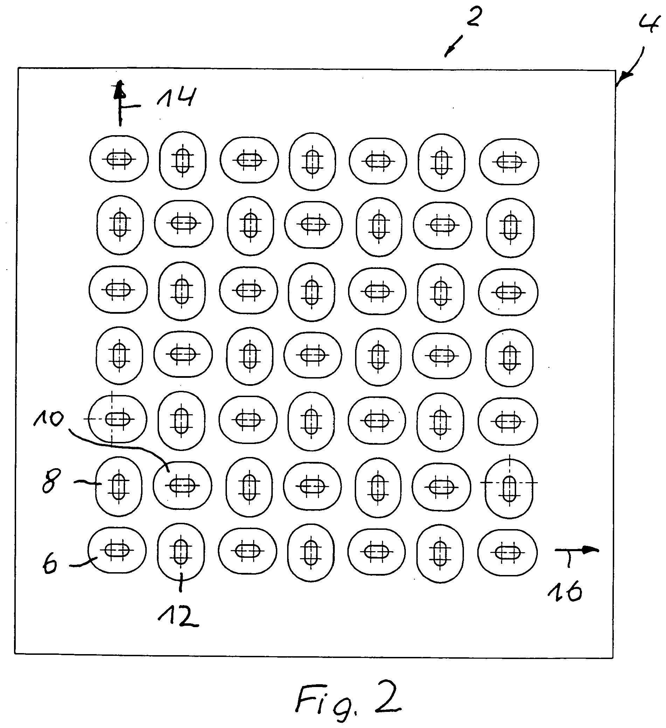

Die Zeichnung zeigt in Figur 1 in einer perspektivischen Ansicht und in Figur 2 in einer Draufsicht ein Ausführungsbeispiel einer erfindungsgemäßen Unterschottermatte 2, die einen Grundkörper 4 aufweist, der bei diesem Ausführungsbeispiel mattenartig ausgebildet ist. An dem Grundkörper sind Federelemente aus elastomerem Material angeordnet, wobei in der Zeichnung der Übersichtlichkeit halber lediglich vier Federelemente mit den Bezugszeichen 6, 8, 10, 12 versehen sind. Die Federelemente 6 - 12 weisen einen Querschnitt auf, der sich von dem Grundkörper 4 zu ihrem freien Ende hin verjüngt. Der Grundkörper 4 kann beispielsweise einen Schichtaufbau aufweisen, wobei eine Dämmschicht aus Gummi-Granulat und an der Ober- und Unterseite jeweils eine verschleißfeste Schutzschicht aus Chloropren vorgesehen ist, die die Dämmschicht vor eventuellen mechanischen Beschädigungen schützt. Der Grundkörper 4 kann ferner mit einer oder mehreren Bewehrungsschichten, beispielsweise aus Polyestergewebe, versehen sein. Die Federelemente 6 - 12 können beispielsweise aus Natur- oder Synthetikkautschuk bestehen und einstückig mit einer Schicht des Grundkörpers ausgebildet sein.

Erfindungsgemäß weisen bei dem dargestellten Ausführungsbeispiel die Federelemente 6 - 12 einen ovalen Querschnitt auf.

Wie insbesondere aus Figur 2 ist, weist der Querschnitt der Federelemente 6 - 12 bei dem dargestellten Ausführungsbeispiel 2 zueinander senkrechte Symmetrieachsen auf, so dass der Querschnitt bei dem dargestellten Ausführungsbeispiel ellipsenförmig ist.

Form, Größe und Anzahl der Federelemente 6 - 12 sind entsprechend den jeweiligen Anforderungen innerhalb weiter Grenzen wählbar. Wie aus der Zeichnung ersichtlich ist, sind die Federelemente 6-12 bei dem dargestellten Ausführungsbeispiel rasterartig nach Art von Zeilen und Spalten an dem Grundkörper 4 angeordnet. Hierbei ist erfindungsgemäß eine erste Gruppe von Federelementen vorgesehen, bei der sich die längere Ausdehung des Querschnitts des jeweiligen Federelementes entlang einer ersten Achse 14 erstreckt. Hierzu gehören beispielsweise die Federelemente 6, 10. Ferner ist erfindungsgemäß eine zweite Gruppe von Federelementen vorgesehen, bei der sich die längere Ausdehnung des Querschnittes entlang einer zweiten Achse 16 erstreckt. Zu dieser zweiten Gruppe gehören beispielsweise die Federelemente 8 und 12. Wie aus Figur 1 ersichtlich ist, sind die erste Achse 14 und die zweite Achse 16 erfindungsgemäß rechtwinkelig zueinander angeordnet.

Wie ferner aus der Zeichnung ersichtlich ist, sind erfindungsgemäß entlang beider Achsen abwechselnd Federelemente der ersten Gruppe und der zweiten Gruppe angeordnet.

Durch den erfindungsgemäß vorgesehenen ovalen Querschnitt der Federelemente 6 - 12 ist die horizontale Steifigkeit entlang der längeren Ausdehnung des Ovals verbessert. Dadurch, dass entlang wenigstens einer Achse abwechselnd Federelemente der ersten Gruppe und Federelemente der zweiten Gruppe angeordnet sind, ergeben sich die verbesserten Eigenschaften eines erfindungsgemäß Elastomerlagers 2 entlang der gesamten Fläche des Grundkörpers 4.

## Patentansprüche

1. Unterschottermatte,
mit einem Grundkörper, an dem Federelemente aus elastomerem Material angeordnet sind, deren Querschnitt sich von dem Grundkörper zu ihrem freien Ende hin verjüngt, **dadurch gekennzeichnet, dass** deren Querschnitt oval ist, wobei eine erste Gruppe von Federelementen (6, 10), bei der sich die längere Ausdehnung des Querschnittes des jeweiligen Federelementes (6, 10) entlang einer ersten Achse (14) erstreckt, und wenigstens eine zweite Gruppe von Federelementen (8, 12) vorgesehen ist, bei der sich die längere Ausdehung des Querschnitts entlang einer zweiten Achse (16) erstreckt, wobei die erste Achse (14) und die zweite Achse (16) rechtwinklig zueinander angeordnet sind und
wobei entlang beider Achsen (14, 16) jeweils abwechselnd Federelemente der ersten Gruppe und Federelemente der zweiten Gruppe angeordnet sind.

2. Unterschottermatte nach Anspruch 1, **dadurch gekennzeichnet, dass** der Querschnitt wenigstens eine Symmetrieachse, insbesondere zwei zueinander senkrechte Symmetrieachsen, aufweist.

3. Unterschottermatte nach Anspruch 1 oder 2, **dadurch gekennzeichnet, dass** die Federelemente (6 - 12) rasterartig, insbesondere nach Art von Zeilen und Spalten, an dem Grundkörper (4) angeordnet sind.

4. Unterschottermatte nach einem der vorhergehenden Ansprüche, **dadurch gekennzeichnet, dass** der Grundkörper (4) mattenartig ausgebildet ist.

5. Unterschottermatte nach einem der vorhergehenden Ansprüche, **dadurch gekennzeichnet, dass** die Federelemente (6 - 12) einstückig mit dem Grundkörper (4) ausgebildet sind.

## Claims

1. Under ballast mat, comprising a base structure, on which spring elements made from an elastomeric material are arranged, the cross-section of which tapers from the base structure to its free end, **characterised in that** the cross-section of the latter is oval, wherein a first group of spring elements (6, 10) is provided for which the longer extension of the cross-section of the respective spring element (6, 10) extends along a first axis (14) and at least one second group of spring elements (8, 12) is provided for which the longer extension of the cross-section extends along a second axis (16), wherein the first axis (14) and the second axis (16) are arranged at right angles to one another and wherein spring elements (6, 10) of the first group and spring elements (8, 12) of the second groups are arranged alternately along both axes (14, 16).

2. Under ballast mat according to claim 1, **characterised in that** the cross-section has at least one axis of symmetry, in particular two axes of symmetry that are perpendicular to one another.

3. Under ballast mat according to claim 1 or 2, **characterised in that** the spring elements (6 - 12) are arranged in the form of a grid, in particular in the form of rows and columns, on the base structure (4).

4. Under ballast mat according to any of the preceding claims, **characterised in that** the base structure (4) Is designed in the form of a mat.

5. Under ballast mat according to any of the preceding claims, **characterised in that** the spring elements (6 - 12) are designed in one piece with the base structure (4).

## Revendications

1. Natte de sous-ballast, avec un corps de base, au niveau duquel sont disposés des éléments élastiques en matériau élastomère, dont la section se rétrécit du corps de base vers leur extrémité libre, **caractérisée en ce que** sa section est ovale, un premier groupe d'éléments élastiques (6, 10) étant prévu, dans lequel l'extension la plus longue de la section de l'élément élastique (6, 10) s'étend le long d'un premier axe (14) et au moins un deuxième groupe d'éléments élastiques (8, 12) étant prévu, dans lequel l'extension la plus longue de la section s'étend le long d'un deuxième axe (16), le premier axe (14) et le deuxième axe (16) étant disposés perpendiculairement entre eux et, le long des deux axes (14, 16), des éléments élastiques du premier groupe et des éléments élastiques du deuxième groupe étant disposés en alternance.

2. Natte de sous-ballast selon la revendication 1, **caractérisée en ce que** la section présente au moins un axe de symétrie, plus particulièrement deux axes de symétrie perpendiculaires entre eux.

3. Natte de sous-ballast selon la revendication 1 ou 2, **caractérisée en ce que** les éléments élastiques (6 à 12) sont disposés à la manière d'une trame, plus particulièrement sous la forme de lignes et de colonnes, sur le corps de base (4).

4. Natte de sous-ballast selon l'une des revendications précédentes, **caractérisée en ce que** le corps de base (4) est conçu sous la forme d'une natte.

5. Natte de sous-ballast selon l'une des revendications précédentes, **caractérisée en ce que** les éléments élastiques (6 à 12) sont réalisés d'une seule pièce avec le corps de base (4).
